# EUROPEAN PATENT SPECIFICATION

(11) **EP 0 716 196 B1**
(45) Date of publication and mention of the grant of the patent: **22.03.2000**
(21) Application number: 95830503.9
(22) Date of filing: 04.12.1995
(51) Int. Cl.: E04D 5/10, E04D 5/14, E01D 19/08, B32B 7/02

(54) **Layered material for waterproofing bridges, viaducts, terraces, roofs and the like**
Schichtmaterial zum Abdichten von Brücken, Viadukten, Terassen, Dächern usw.
Matériau multicouche pour l'étanchéification de ponts viaducts, terrasses, toits etc.

(30) Priority: 06.12.1994 IT MI942477
(43) Date of publication of application: 12.06.1996
(73) Proprietor: ROOFING ITALIANA S.r.l., 20134 Milano (IT)
(72) Inventor: Marinelli, Guiseppe, I-20134 Milano (IT)
(74) Representative: Cicogna, Franco

(56) References cited:
- EP-A- 0 269 989
- EP-A- 0 277 034
- WO-A-90/03887
- CH-A- 595 204
- FR-A- 2 412 417
- GB-A- 608 138

## Description

### BACKGROUND OF THE INVENTION

The present invention relates to a layered material for waterproofing bridges, viaducts, terraces, roofs and the like.

As is known, for waterproofing concrete articles of manufacture, are conventionally used flexible material layers, which are applied on the article by glueing or the like methods.

Such a solution has the drawback that the flexible layers can be easily damaged, thereby loosing their waterproofing properties.

The use of rigid materials, of greater mechanical strength, on the other hand, is not always possible, since the application of rigid material layer would involve great problems mainly during the storing and transporting steps of the several layers.

The document CH-A-595 204 discloses a layered material having substantially the features of the preamble of claim 1.

### SUMMARY OF THE INVENTION

Accordingly, the aim of the present invention is to solve the above mentioned problem, by providing a layered material, for waterproofing bridges, viaducts, terraces, roofs and the like, which can be used, during the installation step, as a flexible material which, after installation, has high stiffness, strength and waterproofing properties, thereby it can not practically damaged.

Within the scope of the above mentioned aim, a main object of the present invention is to provide such a layered material which can be easily wound into coils to be installed as a conventional material for the same applications, with the advantage at, upon installation, it becomes a rigid material.

Another object of the present invention is to provide such a layered material which is very reliable in safe in operation, can be easily made starting from easily available elements and components and which, moreover, is very competitive from a mere economic standpoint.

According to one aspect of the present invention, the above mentioned aim and objects, as well as yet other objects, which will become more apparent hereinafter, are achieved by a layered material for waterproofing bridges, viaducts, terraces, roofs and the like, having the features of the characterizing part of Claim 1.

### BRIEF DESCRIPTION OF THE DRAWINGS

Further characteristics and advantages of the invention will become more apparent hereinafter from the following detailed disclosure of a preferred, though not exclusive, embodiment of a layered material for waterproofing bridges, viaducts, terraces, roofs and the like, which is shown, by way of an indicative, but not limitative, example in the accompanying drawings, where:

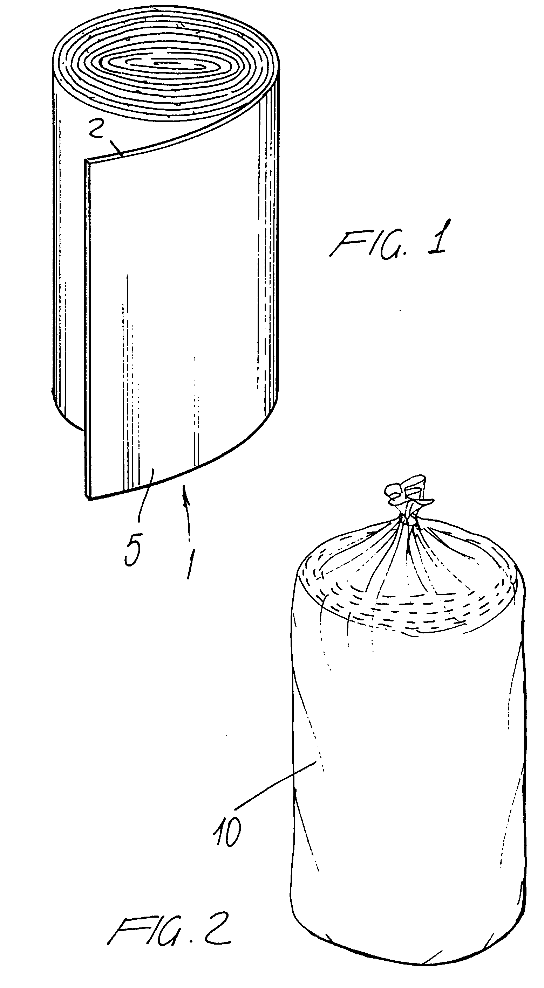

Figure 1 is a schematic view illustrating the layered material according to the present invention wound into a coil;

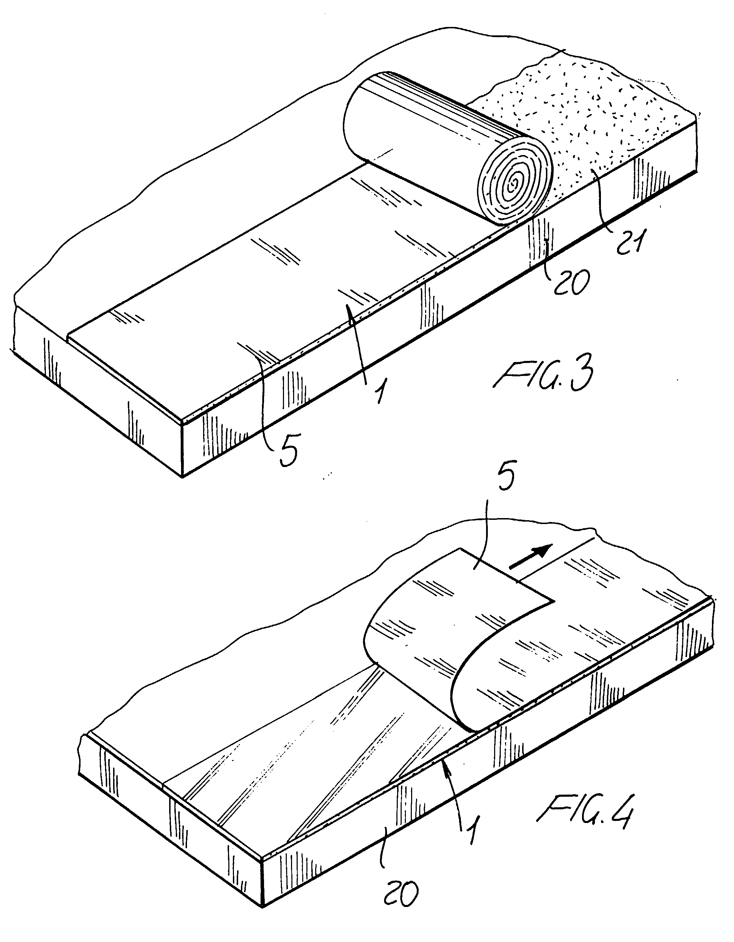

Figure 2 shows the material according to the invention held in a holding bag;
Figure 3 is a perspective view illustrating the installation operation of the subject layered material;
Figure 4 is a perspective view illustrating a protective layer removal step;

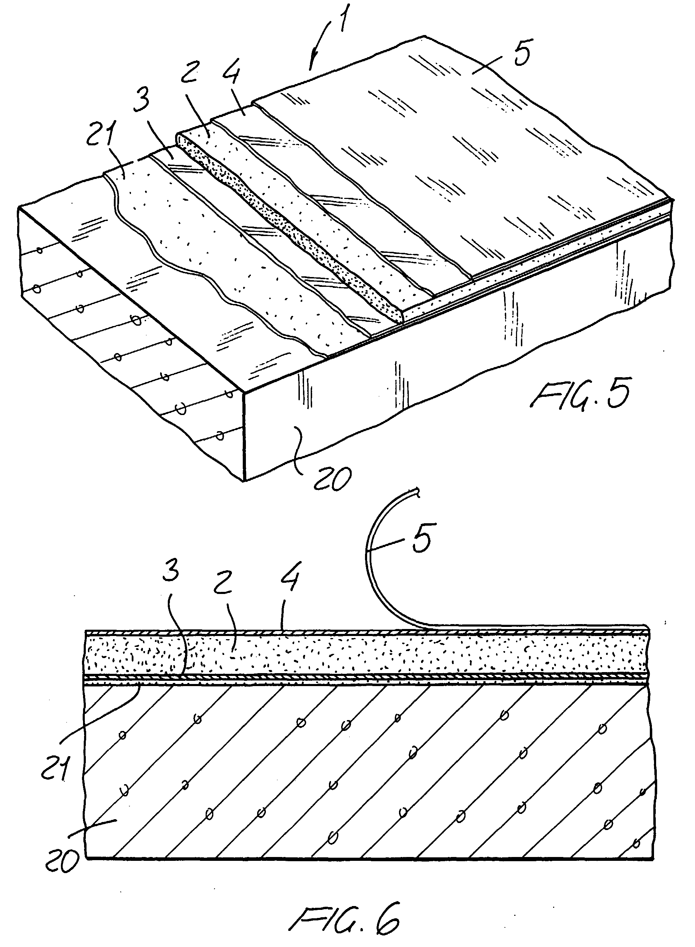

Figure 5 is an exploded view illustrating the layered material of the invention and the component elements thereof; and
Figure 6 is a cross-sectional view illustrating the layered material according to the invention.

### DESCRIPTION OF THE PREFERRED EMBODIMENT

With reference to the number references of the above mentioned figures, the layered material for waterproofing bridges, viaducts, terraces, roofs and the like, according to the present invention, which has been generally indicated by the reference number 1, comprises a central layer 2, preferably made of a fabric pre-impregnated by photopolymerizable or photocurable resins.

The fabric may be a glass wool fabric, or a not woven polyester fabric, the main feature of which is that it is permeable to the light or photopermeable.

On the two faces of the central or core layer 2 are applied plastic material films.

More specifically, a bottom film 3 and a top film 4 are applied, said films being made of polyethylene, polyester, PVC and the like, and having the feature that they are photopermeable.

The thus made material has good resiliency or flexibility properties, thereby it can be easily wound to form a roll and introduced into a bag 10, made of a photoimpermeable material.

On the top film 4, opaque film 5 can be applied, as the installation of the subject material must be formed under full light, that is sun light, thereby the material can be easily installed without any photopolymerizing reaction.

In actual practice, the layered material is installed by applying, on the concrete article 20, a primer layer 21, which is advantageously of a type disclosed in a previous Italian patent application MI92A002735, filed on November 27,1992, herein incorporated by reference, and which will practically operate as an adhesive material for binding the bottom film 3.

The adhesive primer is preferably of a solventless type, liquid and photocurable at room temperature; moreover, it is specifically formulated to be easily applied with a desired thickness by a single application.

The room temperature photopolymerization or photo cross-linking can be obtained by using in the formulation reactive pre-polymers and monomers, by which it is possible to prepare two-component material, to be mixed before use or photopolymerizable prepolymers and monomers.

If the adhesive primer is of a two-component reactive type, then the polymer component and possible monomer components thereof will be of an epoxy type, or polyurethane, acrylic, unsaturated polyester or vinylester type.

If the adhesive primer is photopolymerizable, then the polymeric and possible monomeric components thereof will be based on epoxy, acrylated-epoxy, or acrylated polyurethane or acrylic or unsaturated polyester or vinylester types, and the polymerization reaction will be triggered, under radiation, by suitable starting agents.

If the layered material is installed in an environment which is not subjected to a direct sunlight, then it will be possible to lay a material without any opaque film 5, whereas, under a sunlight, the layered material must be protected by the opaque film 5.

The polymerization or cross-linking process is performed under UV radiation, derived both from the sun and from UV lamps, and will require a very reduced reaction time of the order of 2-5 minutes; this reduced reaction time is very important for operation in viaducts or rail bridges, where the process must have a duration as short as possible in order to quickly recover the traffic.

Upon installation, the black polyethylene layer 5 is removed and, within few minutes, the photopolymerization reaction will occur, thereby to provide the applied layered material with a sufficient stiffness.

In this connection it should be apparent that, in several applications, the bottom film 3 will be removed, in order to perform a direct contact of the central layer 2 with the primer layer.

From the above disclosure it should be apparent that the invention fully achieves the intended aim and objects.

In particular, the fact is to be pointed out that a layered material has been provided which, before installation, operates substantially as a flexible material and, accordingly, can be easily wound into coils, whereas, after installation, owing to the photopolymerization obtained under a direct sunlight or under UV radiating lamps, the layered material will cure, so as to provide a very satisfactory protective and waterproofing material for the underlaying concrete article.

The invention, as disclosed, is susceptible to several variations and modifications, all of which will come within the inventive idea scope.

In practicing the invention the contingent size and shapes, can be any, according to requirements.

## Claims

1. A layered material (1) for waterproofing bridges, viaducts, terraces, roofs and the like, said material comprising a central layer (2) made of a fabric impregnated by photopolymerizable resins and provided, on the two faces thereof, with a photopermeable plastic material film (3, 4), characterized in that said layered material (1) comprises, on said top photopermeable plastic material film (4), an opaque film (5), suitable to operate as a protecting element in environments directly radiated by the sun rays.

2. A layered material according to Claim 1, characterized in that said central layer (2) is made by a glass fiber fabric.

3. A layered material according to one or more of the preceding claims, characterized in that said central layer (2) is made of a polyester not-woven fabric, permeable to the sun rays.

4. A layered material according to one or more of the preceding claims, characterized in that it can be wound into coils before installation.

5. A layered material according to one or more of the preceding claims, characterized in that it is applied by an adhesive primer comprising a photocurable prepolymer, which is photochemically cured simultaneously with the pre-impregnated material, during a radiation step.

6. A layered material according to one or more of the preceding claims, characterized in that said primer comprises a two-component resin, which is suitable to be slightly cured after the photocuring of the pre-impregnated material.

7. A layered material according to one or more of the preceding claims, characterized in that the photocuring of the central layer (2) is performed by a direct sun illumination or by means of UV lamps.

8. A layered material according to one or more of the preceding claims, characterized in that said photocuring is performed in 2-5 minutes.

## Patentansprüche

1. Ein Schichtmaterial (1) zum Abdichten von Brücken, Viadukten, Terrassen, Dächern und dergleichen, wobei dieses Material eine mittlere Schicht (2) umfaßt, die aus einem Gewebe besteht, das mit lichthärtenden Harzen getränkt ist, und die auf ihren beiden Seiten mit einem Film aus lichtdurchlässigem Kunststoff (3, 4) ausgestattet ist, dadurch gekennzeichnet, daß dieses Schichtmaterial (1) auf diesem Film aus lichtdurchlässigem Kunststoff (4) einen opaken Film (5) umfaßt, der dazu geeignet ist, in einer direkt den Sonnenstrahlen ausgesetzten Umgebung als Schutzelement zu wirken.

2. Ein Schichtmaterial nach Anspruch 1, dadurch gekennzeichnet, daß diese mittlere Schicht (2) aus einem Glasfasergewebe gefertigt ist.

3. Ein Schichtmaterial nach einem oder mehreren der vorhergehenden Ansprüche, dadurch gekennzeichnet, daß diese mittlere Schicht (2) aus einem für die Sonnenstrahlen durchlässigen Polyesterfaservlies gefertigt ist.

4. Ein Schichtmaterial nach einem oder mehreren der vorhergehenden Ansprüche, dadurch gekennzeichnet, daß es vor seinem Einsatz zu Rollen aufgewickelt werden kann.

5. Ein Schichtmaterial nach einem oder mehreren der vorhergehenden Ansprüche, dadurch gekennzeichnet, daß es mittels eines haftenden Primers angebracht wird, der ein lichthärtendes Polymer umfaßt, das während eines Bestrahlungsschrittes gleichzeitig mit dem vorgetränkten Material photochemisch ausgehärtet wird.

6. Ein Schichtmaterial nach einem oder mehreren der vorhergehenden Ansprüche, dadurch gekennzeichnet, daß dieser Primer ein Zweikomponentenharz umfaßt, das dazu geeignet ist, nach dem Lichthärten des vorgetränkten Materials schwach auszuhärten.

7. Ein Schichtmaterial nach einem oder mehreren der vorhergehenden Ansprüche, dadurch gekennzeichnet, daß das Lichthärten der mittleren Schicht (2) durch direkte Sonneneinstrahlung oder mittels UV-Lampen durchgeführt wird.

8. Ein Schichtmaterial nach einem oder mehreren der vorhergehenden Ansprüche, dadurch gekennzeichnet, daß dieses Lichthärten innerhalb von 2-5 Minuten durchgeführt wird.

## Revendications

1. Matériau en couches (« layered material ») (1) pour rendre imperméable des ponts, des viaducs, des terrasses, des toits et analogues, ledit matériau comprenant une couche centrale (2) fabriquée à partir d'une structure imprégnée de résines photopolymèrisables et recouverte sur ses deux faces avec un film de matière plastique photoperméable (3, 4), caractérisé en ce que ledit matériau en couche (1) comprend sur ledit film de matière plastique photoperméable de dessus (4), un film opaque (5), convenable pour servir d'élément protecteur dans un environnement directement irradié par les rayons du soleil.

2. Matériau en couches selon la revendication 1, caractérisé en ce que la couche centrale (2) est fabriquée à partir d'une structure de fibre de verre.

3. Matériau en couches selon une ou plusieurs des revendications précédentes, caractérisé en ce que ladite couche centrale (2) est fabriquée à partir d'une structure de polyester non tissée perméable aux rayons du soleil.

4. Matériau en couches selon une ou plusieurs des revendications précédentes, caractérisé en ce qu'il peut être enroulé en rouleaux avant son installation.

5. Matériau en couches selon une ou plusieurs des revendications précédentes, caractérisé en ce qu'il est appliqué au moyen d'une amorce adhésive comprenant un prépolymère photovulcanisable ("photocurable") qui est vulcanisé de manière photochimique simultanément avec le matériau pré-imprégné ceci durant l'étape de radiation.

6. Matériau en couches selon une ou plusieurs des revendications précédentes, caractérisé en ce que ladite amorce comprend une résine à deux composants qui est adaptée pour être vulcanisée légèrement après la photovulcanisation du matériel pré-imprégné.

7. Matériau en couches selon une ou plusieurs des revendications précédentes, caractérisé en ce que la photovulcanisation de la couche centrale (2) est réalisée par une illumination du soleil direct ou au moyen de lampes U.V.

8. Matériau en couches selon une ou plusieurs des revendications précédentes, caractérisé en ce que ladite photovulcanisation est réalisée en 2 à 5 minutes.
